# EUROPÄISCHE PATENTANMELDUNG

(11) **EP 2 221 476 A1**
(43) Veröffentlichungstag der Anmeldung: **25.08.2010**
(21) Anmeldenummer: 09180752.9
(22) Anmeldetag: 24.12.2009
(51) Int. Cl.: F03D 7/02

(54) **Verstellmechanismus für die Rotorblätter von Windkraftanlagen**

(30) Priorität: 20.02.2009 LU 91529
(71) Anmelder: NOVO ENERGIE S.àr.l., 3249 Bettembourg (LU)
(72) Erfinder: Seiwerath, Constant, 3249, Bettembourg (LU)
(74) Vertreter: Lecomte, Didier

(57) **Zusammenfassung**

Die Erfindung betrifft eine Vorrichtung zur Fliehkraftregelung des Anstellwinkels von mindestens einem Rotorblatt einer Windkraftanlage, wobei das mindestens eine Rotorblatt um eine Anstellachse drehbar gelagert ist und die Vorrichtung ein bewegliches Fliehgewicht (1.1) sowie eine erste mechanische Verbindung (2.0), die das Fliehgewicht (1.1) mit dem mindestens einen Rotorblatt zur Regelung des Anstellwinkels verbindet, umfasst. Dabei umfasst die erste mechanische Verbindung (2.0) erfindungsgemäß einen vorgespannten Anschlag (2.1, 2.2), der mit dem mindestens einen Rotorblatt in Anlage kommt, wenn das Fliehgewicht auf die erste mechanische Verbindung (2.0) einen Zug ausübt. Weiterhin umfasst die Vorrichtung erfindungsgemäß eine zweite mechanische Verbindung (5.0), die mit dem mindestens einen Rotorblatt und dem Fliehgewicht (1.1) derart verbunden ist, dass sich die erste und die zweite mechanische Verbindung (2.0, 5.0) beim Drehen des mindestens einen Rotorblatts in entgegengesetzte Richtungen (4.1, 4.2) bewegen, wobei die zweite mechanische Verbindung (5.0) einen Anschlag (5.1) umfasst, der derart angeordnet und ausgebildet ist, dass das Fliehgewicht (1.1) einen Zug auf die zweite mechanische Verbindung (5.0) gegen die Vorspannung des vorgespannten Anschlags (2.1, 2.2) ausübt, wenn die Fliehkraft eine vorgebbare Kraft überschreitet. Durch eine derartige Regelung kann die Drehzahl einer Windkraftanlage unabhängig von der Windgeschwindigkeit auf einfachem Weg konstant gehalten werden.

## Beschreibung

### Gebiet der Technik

Die vorliegende Erfindung betrifft einen mechanischen Verstellmechanismus, der insbesondere als Fliehkraftregelung zum Verstellen des Anstellwinkels der Rotorblätter bei kleinen und bei mittelgroßen Windkraftanlagen zur Anwendung gelangen kann.

### Stand der Technik

Große Windkraftanlagen (WkA) haben des Öfteren ein aerodynamisches Bremssystem über die Verstellung der Rotorblätter. Dieses Bremssystem (Verstellen) wird ebenfalls benutzt um das Anfahren der WkA zu erleichtern. Die Blätter haben somit eine Anfahrstellung, eine feste Betriebsstellung und eine variable Betriebsstellung, auch Pitchstellung oder nur Pitch genannt. Dieses Pitchsystem hat die Aufgabe, die Nennleistung der WkA während und oberhalb der sinnvoll nutzbaren Windgeschwindigkeit zu begrenzen. Dazu werden die Rotorblätter gleichzeitig aus dem Wind gedreht, d.h. in Richtung 90 Grad bewegt, von der Betriebsstellung in die Anfahrstellung. Diese Verstellung der Flügel wird meistens mit Elektromotoren aktiviert. Kleine Windkraftanlagen benutzen dagegen öfters mechanische Fliehkraftregler um die Nennleistung zu begrenzen.

Fast alle bekannten mechanischen Fliehkraftregler haben für diese Anwendung entscheidende Nachteile. Die bekannten mechanischen Flügelregelungen mittels Fliehkraftregler mit Anfahrstellung, Betriebsstellung und Pitchregelung sind sehr aufwendig, ungenau und teuer, was deren Anwendung erheblich einschränkt.

Die Offenlegungsschrift DE 31 15 202 A1 offenbart zum Beispiel einen Fliehkraftregler für die Drehzahlregelung von Windturbinen mit Blattverstellung, wobei der Regler bei nur geringer Überschreitung einer Solldrehzahl eine auch für große Windgeschwindigkeit ausreichende Blattverstellung erzielen soll und parallel zur Reglerfeder ein Dämpfer geschaltet ist, der das Rotor-Regler-System stabilisiert. Nachteilig an dieser Vorrichtung ist unter anderem, dass eine zusätzliche Dämpfereinheit benötigt wird, welche gemäß der Erfindung der Offenlegungsschrift durch einen Luftbalg mit einstellbarer Drosselbohrung gebildet wird. Solch eine zusätzliche, pneumatische Dämpfereinheit ist platzraubend und wartungsaufwendig. Zudem unterliegt sie einem Verschleiß. Funktioniert die Dämpfereinheit zum Beispiel aufgrund eines Lecks nicht mehr korrekt, können bei starken Winden schwere Schäden an der Windkraftanlage resultieren. Eine weitere Maßnahme zur Leistungsregelung der Windturbine besteht grundsätzlich aus zwei Langlochstangen S1 und S2 mit unterschiedlichen Arbeitswegen und, die einem Angriffspunkt B1 des Fliehkraftreglers zusammenwirken. Je nach Drehmoment wird das Blatt der Windturbine in eine oder in eine andere Richtung bewegt. Diese Regelung reagiert lediglich auf das Drehmoment und ist daher nicht für eine Fliehkraftregelung anwendbar.

Aufgabe dieser Erfindung ist es, eine einfache, zuverlässige oder preisgünstige mechanische Regelung vorzuschlagen, welche zumindest einen der genannten Nachteile überwindet.

### Offenbarung der Erfindung

Die Erfindung beruht auf einer Vorrichtung zur Fliehkraftregelung des Anstellwinkels von mindestens einem Rotorblatt einer Windkraftanlage, wobei das mindestens eine Rotorblatt um eine Anstellachse drehbar gelagert ist und die Vorrichtung Folgendes umfasst: ein bewegliches Fliehgewicht; eine erste mechanische Verbindung, die das Fliehgewicht mit dem mindestens einen Rotorblatt zur Regelung des Anstellwinkels verbindet und wobei die erste mechanische Verbindung erfindungsgemäß einen vorgespannten Anschlag umfasst, der mit dem mindestens einen Rotorblatt in Anlage kommt, wenn das Fliehgewicht auf die erste mechanische Verbindung einen Zug ausübt und die Vorrichtung weiterhin eine zweite mechanische Verbindung umfasst, die mit dem mindestens einen Rotorblatt und dem Fliehgewicht derart verbunden ist, dass sich die erste und die zweite mechanische Verbindung beim Drehen des mindestens einen Rotorblatts in entgegengesetzte Richtungen bewegen und die zweite mechanische Verbindung einen Anschlag umfasst, der derart angeordnet und ausgebildet ist, dass das Fliehgewicht einen Zug auf die zweite mechanische Verbindung gegen die Vorspannung des vorgespannten Anschlags ausübt, wenn die Fliehkraft eine vorgebbare Kraft überschreitet.

Durch eine derartig konzipierte Vorrichtung kann eine zuverlässige, einfache und kostengünstige Anstellung der Rotorblätter erfolgen. Weiterhin kann diese rein mechanische Flügelverstellung sowohl durch Fliehkraft oder durch eine anders erzeugte oder bereits vorhandene Kraft (z.B. mechanisch, elektrisch, hydraulisch) erreicht werden. Als Fliehkraftregelung kommt der Vorteil hinzu, dass:
1. keine dauernd aktive, sogar im Standby-Betrieb, energieverzehrende Anlage notwendig ist;
2. die Stellung der Fliehgewichte und somit auch automatisch der Weg der Verstellmechanik von der Umdrehungszahl abhängig ist. So können gleich mehrere unausweichliche Tatsachen genutzt werden.
3. Die Anfahrstellung benötigt nur eine geringe Federkraft zum Ausgleich der Fliehkraft, sonst würde der Anlauf der WkA zu spät einsetzen.
4. Die Pitchregelung wird erst bei der Nennleistung benötigt, wo bereits eine große Fliehkraft vorhanden ist. Deshalb kommt zur Regelung eine vorgespannte Feder zum Einsatz, welche erst genau zum Zeitpunkt vom Überschreiten der Nennlast von der Fliehkraft überwunden wird.
5. Bei Einsetzen des Pitch versucht die Drehzahl und somit die Fliehkraft anzuwachsen. Dabei wird die bereits vorgespannte Feder weiter zusammengepresst. Sie wird deshalb so ausgelegt, dass zu jedem Moment die Fliehkraft mit der jetzt zusätzlichen Federkraft bis auf wenige Umdrehungen genau im Gleichgewicht steht. Eine Drehzahlerhöhung der WkA wird durch das Verstellen der Rotorblätter ausgeschlossen. Dies führt dazu, dass die WkA die Nennleistung genau abfährt, unabhängig von der Windgeschwindigkeit.
6. Weil der Winddruck überwiegend von der dem Wind entzogenen Leistung abhängig ist, werden Veränderungen der Windlast auf die Anlage erheblich reduziert. Somit wird durch diese Regelung zusätzlich die Gesamtbelastung der WkA verringert und die Lebensdauer erhöht.
7. Selbst bei einem Ausfall des Netzes oder des Generators oder sonstigem el. Fehler ist auch ohne Bremse eine Überdrehzahl ausgeschlossen.

In einer bevorzugten Ausführungsform der erfindungsgemäßen Vorrichtung ist die erste mechanische Verbindung und/oder die zweite mechanische Verbindung jeweils durch eine Zugstange gebildet.

In einer weiteren bevorzugten Ausführungsform der Vorrichtung ist die zweite mechanische Verbindung derart angeordnet und ausgebildet, dass der Zug des Fliehgewichts auf die zweite mechanische Verbindung, ein Anstellen des mindestens einen Rotorblatts in die, in Bezug auf das Anstellen durch die erste mechanische Verbindung, entgegengesetzte Richtung hervorruft.

In einer weiteren bevorzugten Ausführungsform der Vorrichtung, ist die erste mechanische Verbindung durch eine erste Zugstange gebildet, wobei der vorgespannte Anschlag eine Feder, vorzugsweise eine Druckfeder, umfasst, die in Richtung der Längsachse der ersten Zugstange angeordnet ist, wobei die Feder derart ausgebildet ist, dass diese eine Vorspannung in Richtung der Längsachse der ersten Zugstange erzeugt.

In einer weiteren bevorzugten Ausführungsform der Vorrichtung, umfasst die Vorrichtung einen, wahlweise einstellbaren, Begrenzer, insbesondere eine Begrenzungszange, der derart angeordnet und ausgebildet ist, dass eine Vorspannung der Feder unabhängig von der Position des Fliehgewichts erhalten bleibt.

In einer weiteren bevorzugten Ausführungsform der Vorrichtung ist die erste und die zweite mechanische Verbindung jeweils durch eine Zugstange gebildet, wobei jede Zugstange jeweils an einem Punkt mit dem Rotorblatt verbunden wird und diese beiden Punkte senkrecht zur Anstellachse betrachtet im Wesentlichen gegenüberliegend angeordnet sind. Durch diese Anordnung kann die Vorrichtung besonders wirkungsvoll arbeiten.

In einer weiteren bevorzugten Ausführungsform der Vorrichtung ist die erste mechanische Verbindung durch eine erste Zugstange gebildet und die zweite mechanische Verbindung durch eine zweite Zugstange gebildet, wobei die erste Zugstange und/oder die zweite Zugstange drehbar und/oder vorzugsweise durch ein Anschlagrohr gleitend, mit dem mindestens einen Rotorblatt verbunden sind.

In einer weiteren bevorzugten Ausführungsform der Vorrichtung, umfasst die Vorrichtung weiterhin einen Hebel, welcher ein erstes Ende aufweist, an dem dieser drehbar mit einer Drehachse verbunden ist und ein zweites Ende aufweist, an dem das Fliehgewicht angeordnet ist, wobei die erste mechanische Verbindung durch eine erste Zugstange gebildet ist, welche an einem ersten Ende drehbar mit einem ersten Punkt an dem Hebel verbunden ist und der vorgespannte Anschlag im Wesentlichen an dem zweiten Ende der ersten Zugstange angeordnet ist; und die zweite mechanische Verbindung durch eine zweite Zugstange gebildet ist, die vorzugsweise durch ein Anschlagrohr gleitend und drehbar mit dem Hebel in einem zweiten Punkt verbunden ist und ein zweites Ende der zweiten Zugstange drehbar mit dem mindestens einen Rotorblatt verbunden ist.

In einer weiteren bevorzugten Ausführungsform der Vorrichtung, umfasst die Vorrichtung weiterhin einen Hebel, welcher ein erstes Ende aufweist, an dem dieser drehbar mit einer Drehachse verbunden ist und ein zweites Ende aufweist, an dem das Fliehgewicht angeordnet ist und wobei die erste mechanische Verbindung durch eine erste Zugstange gebildet ist, welche an einem ersten Ende drehbar mit dem Hebel in einem ersten Punkt verbunden ist und der vorgespannte Anschlag im Wesentlichen an dem zweiten Ende der ersten Zugstange angeordnet ist und wobei die zweite mechanische Verbindung durch eine zweite Zugstange gebildet ist, welche an einem Ende drehbar mit dem Hebel in einem zweiten Punkt verbunden ist und weiterhin die zweite Zugstange vorzugsweise durch ein Anschlagrohr gleitend und drehbar mit dem mindestens einen Rotorblatt verbunden ist.

In einer weiteren bevorzugten Ausführungsform der Vorrichtung ist der zweite Punkt, in dem die zweite Zugstange mit dem Hebel verbunden ist, näher in Richtung des Fliehgewichts angeordnet als der erste Punkt, in dem die erste Zugstange mit dem Hebel verbunden ist.

In einer weiteren bevorzugten Ausführungsform der Vorrichtung ist die zweite mechanische Verbindung durch eine zweite Zugstange gebildet und der Anschlag dieser Zugstange durch ein Einstellmittel, vorzugsweise eine Stellschraube gebildet, mit dem die Position des Anschlags auf der zweiten Zugstange verstellbar ist, so dass die Kraft, oberhalb der zweiten Zugstange einen Zug auf das mindestens eine Rotorblatt ausübt, einstellbar ist.

In einer weiteren bevorzugten Ausführungsform der Vorrichtung, ist die zweite mechanische Verbindung durch eine zweite Zugstange gebildet, wobei die Vorrichtung weiterhin eine Zugfeder umfasst, welche an einem ihrer Enden mit dem Fliehgewicht, oder wahlweise dem Hebel, verbunden ist und an ihrem anderen Ende mit der zweiten Zugstange verbunden ist, sodass die Anfahrstellung des mindestens einen Rotorblatts mittels der Zugfeder einstellbar ist.

In einer weiteren bevorzugten Ausführungsform der Vorrichtung ist der vorgespannte Anschlag derart ausgebildet ist, dass dieser eine größere Federkraft als die Zugfeder aufweist.

In einer weiteren bevorzugten Ausführungsform der Vorrichtung ist die Zugfeder im Wesentlichen parallel zu der zweiten Zugstange angeordnet.

### Kurze Beschreibung der Figuren

- Fig. 1 zeigt eine bevorzugte Ausführungsform der Erfindung in Anfahrstellung.
- Fig. 2 zeigt die gleiche bevorzugte Ausführungsform der Erfindung in Arbeitsstellung.
- Fig. 3 zeigt die gleiche bevorzugte Ausführung der Erfindung in Pitchstellung bzw. Pitchregelung.

### Detaillierte Beschreibung der Ausführungsbeispiele

Der Einfachheit halber wird hier nur schematisch das Funktionsprinzip an einem einzigen Rotorblatt und Fliehgewicht beschrieben, wobei die Bewegung am Rotorblatt nur symbolisch mit einem Kreis, als dessen Lagerung dargestellt wird. Kommen mehrere Flügel zum Einsatz, so sind die Bewegungen der Fliehgewichte vorzugshalber zu synchronisieren. Weil bei Kleinwindanlagen die Verstellung auf 90 Winkelgrad nicht notwendig ist, wird hier in den Figuren auch nur eine Verstellung um 60 Grad dargestellt.

Gemäß einer bevorzugten Ausführungsform der Erfindung erzeugt die Bewegung eines, an einem Hebel mit Drehachse (1.0) befestigten Fliehgewichtes (1.1) in einer Richtung (1.2) mit Hilfe einer Zugstange (2.0), eine Weiterleitung der Bewegung auf das Lager (3.0) des Flügels. Generell können anstatt einer Zugstange (2.0, 5.0) jedoch auch andere mechanische Verbindungen zum Einsatz kommen. Denkbar sind zum Beispiel auch Ketten, Seile, Druckstößel, Zahnräder usw.

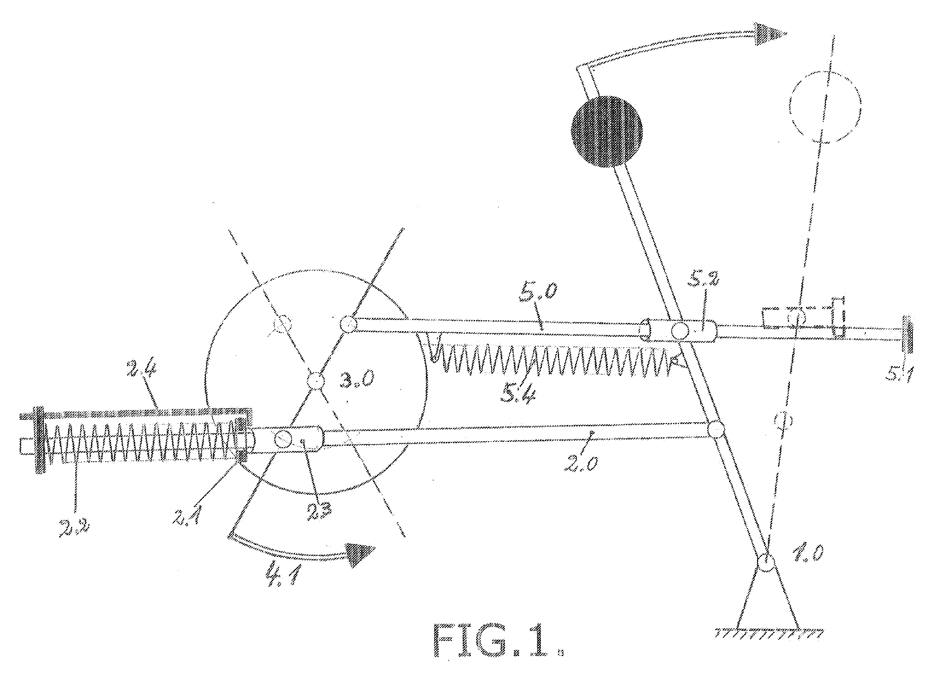

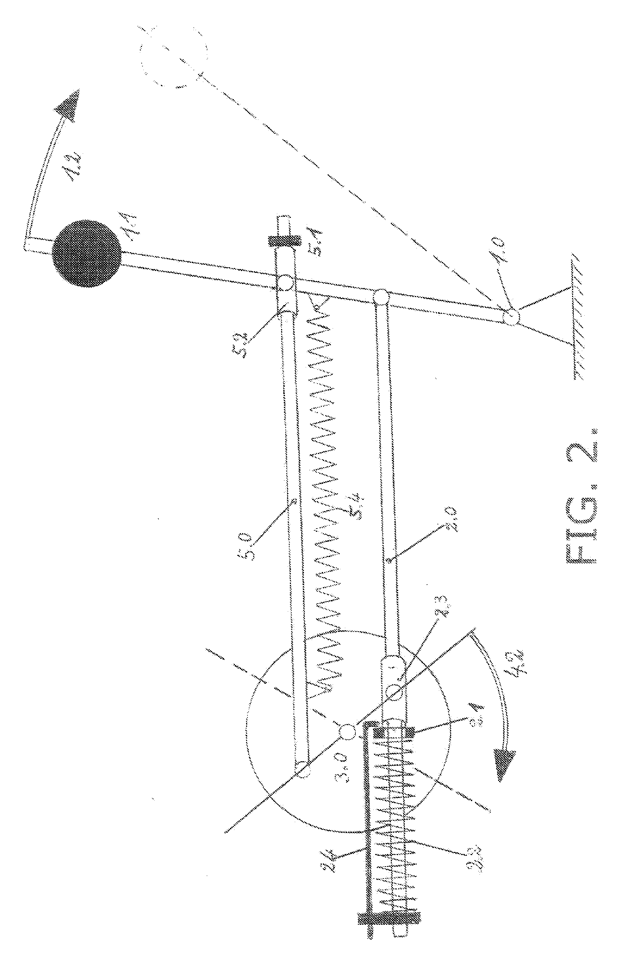

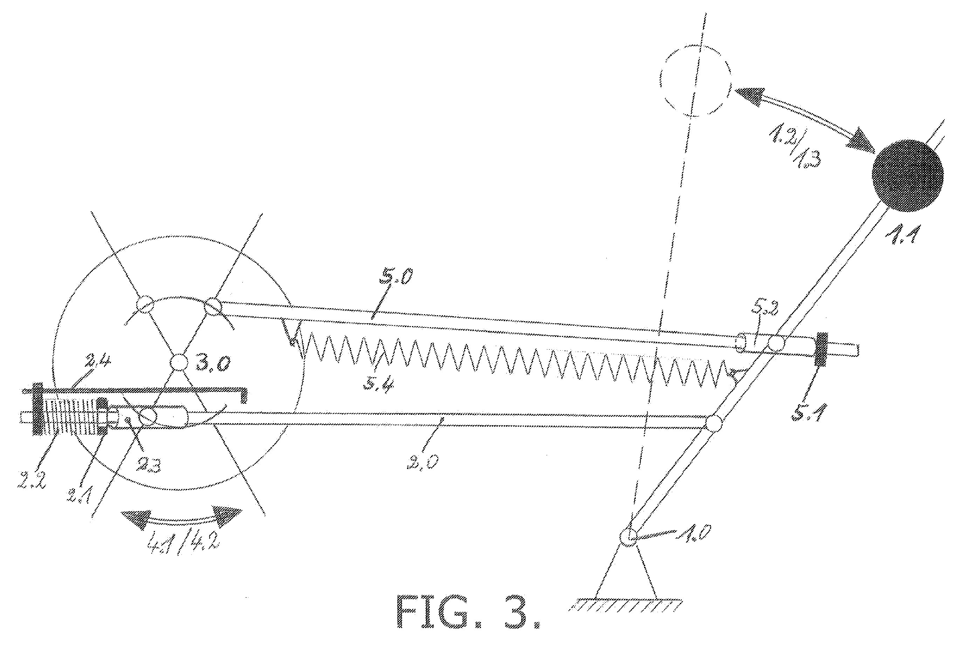

Die Zugstange (2.0) ist mit einer Anschlagscheibe (2.1) und einer vorgespannten Feder (2.2) ausgestattet, in Fig. 1, Fig. 2, und Fig. 3 dargestellt durch eine Feder. Die Kraft bzw. die Bewegung wird in eine Richtung (4.1) geleitet (in Fig. 1 gegen den Uhrzeigersinn), bis zu dem Moment, dass an der gegenüberliegenden Zugstange (5.0), die einstellbare Stellschraube (5.1) zum Anschlag (5.2) gelangt (siehe Fig. 2). Jetzt wird die Fliehkraft über diese Zugstange (5.0) übertragen. Der Flügel bewegt sich nun wieder im Uhrzeigersinn (4.2) und das Fliehgewicht (1.1) ebenfalls noch immer im Uhrzeigersinn (1.2) (siehe Fig. 2). Die bereits vorgespannte Druckfeder (2.2) wird noch weiter zusammengedrückt, während sich die Fliehkraft in jedem Moment zu der Federkraft im Gleichgewicht befindet. Das zusätzliche Zusammendrücken ist möglich, weil die Anschlagscheibe (2.1) zum Beispiel beweglich auf der Zugstange (5.0) sitzt. Die Bewegung wird allerdings in einer Richtung, durch das Anschlagrohr (2.3) sowie die einstellbare Begrenzungszange (2.4) verhindert, wodurch die einmal eingestellte Vorspannung der Feder (2.2) immer, unabhängig von der Stellung des Fliehgewichtes, erhalten bleibt. Ein zusätzliches Zusammendrücken ist dagegen gewährleistet. Die Zugfeder mit geringer Federkraft (5.4) wird während der Bewegung von der Anfahrstellung zur Betriebsstellung geringfügig zusätzlich gespannt, hat während dem Pitch dann allerdings keinen Einfluss mehr. Diese geringe Kraft der Zugfeder (5.4) kann problemlos berücksichtigt und der Vorspannkraft der Druckfeder (2.2) dazu addiert werden. Es ist deutlich erkennbar, dass das Fliehgewicht (1.1) sich nur im Uhrzeigersinn bewegt, der Flügel (3.0) hingegen eine Hin- und Zurückbewegung ausführt. Auch ist erkennbar, dass während der Betriebsstellung (siehe Fig. 2), von ganz wenig Wind bis zur Nennleistung, trotz der dauernd veränderten Umdrehungszahl der WkA und somit der laufend schwankenden Fliehkraft, absolut keine Bewegung am Flügel entsteht. Erst bei einem bis maximal zwei Prozent (reibungsbedingt) oberhalb der Nennumdrehungszahl beginnt der Pitch mit der Arbeit und begrenzt die Nennleistung. Dies ist sichtbar bei Fig. 2 und Fig. 3 was einem dauernden Gleichgewicht zwischen der Federkraft und der Fliehkraft entspricht. Dieses Gleichgewicht entspricht einem sofortigen Verstellen des Flügels, bei der geringsten Erhöhung oder Verringerung der Drehzahl. Hinzu kommt, dass in Pitchstellung mit relativ kleinen Bewegungen am Fliehgewicht große Winkelbewegungen am Flügel erzeugt werden. Einen vollen Ausschlag des Fliehgewichtes, wie in der Figur 3 (ganz nach rechts) gezeigt, wird es in der Natur wohl äußerst selten geben. Bei einer Verstellung um 60 Winkelgrad steht das Rotorblatt in einem Winkel von fast nur noch 30 Grad zum Wind. Dieser Anstellwinkel entspricht einem Flügelschnelllauf von weniger als eins. Selbst bei extrem seltenem Wind von 70 m/s, das entspricht 252 km/h ist in dieser Stellung eine Überdrehzahl auszuschließen. Aber nicht nur die aerodynamische, auch die mechanische Sicherheit ist gewährleistet. Bei einem möglichen Bruch von einer Feder geht die Regelung sehr viel früher in die Pitchstellung, wodurch der Bruch für jeden sofort deutlich wird.

Bis heute ist keine, bei Hin- und Zurückbewegung, in der Genauigkeit vergleichbarer Fliehkraftregelung mit so hochpräzise auslösender und genau einhaltender Umdrehungszahl bekannt. Die Erfindungshöhe dieser Erfindung ist gekennzeichnet durch die Tatsache, dass die Kraft bzw. die Bewegung des Fliehgewichtes nicht nur durch eine Zugstange übertragen wird, sondern durch zwei, welche zu unterschiedlichen Zeiten in Betrieb sind. Dabei wird die Bewegung der Fliehkraft durch die einstellbare Stellschraube (5.1), an der einen Zugstange (2.0) automatisch außer Betrieb gesetzt und auf die andere Zugstange (5.0) übertragen. Die Erfindungshöhe ist desweiteren gekennzeichnet durch die schwer zu erkennende Möglichkeit der Gruppierung von mehreren Zugstangen, welche von einem Hebelarm mit dem Fliehgewicht gemeinsam bewegt werden, und trotzdem zu unterschiedlichen Zeiten in Betrieb sind.

Zusätzliche Erfindungshöhe ist gekennzeichnet, durch die, selbst für Fachleute, schwer zu erkennende, erfindungsgemäße Lösung. Bis heute wurde bereits viel technischer Aufwand unternommen und weltweit zahlreiche Versuche gestartet. Trotzdem ist bis zu dieser Erfindung noch nie eine so einfache und derart hochpräzise, absolut sichere, doppeltwirkende Fliehkraftregelung gebaut worden.

## Patentansprüche

1. Vorrichtung zur Fliehkraftregelung des Anstellwinkels von mindestens einem Rotorblatt einer Windkraftanlage, wobei das mindestens eine Rotorblatt um eine Anstellachse drehbar gelagert ist und die Vorrichtung Folgendes umfasst:
ein bewegliches Fliehgewicht (1.1); eine erste mechanische Verbindung (2.0), die das Fliehgewicht (1.1) mit dem mindestens einen Rotorblatt zur Regelung des Anstellwinkels verbindet;
**dadurch gekennzeichnet, dass**
die erste mechanische Verbindung (2.0) einen vorgespannten Anschlag (2.1, 2.2) umfasst, der mit dem mindestens einen Rotorblatt in Anlage kommt, wenn das Fliehgewicht auf die erste mechanische Verbindung (2.0) einen Zug ausübt; wobei die Vorrichtung weiterhin eine zweite mechanische Verbindung (5.0) umfasst, die mit dem mindestens einen Rotorblatt und dem Fliehgewicht (1.1) derart verbunden ist, dass sich die erste und die zweite mechanische Verbindung (2.0, 5.0), beim Drehen des mindestens einen Rotorblatts, in entgegengesetzte Richtungen (4.1, 4.2) bewegen und die zweite mechanische Verbindung (5.0) einen Anschlag (5.1) umfasst, der derart angeordnet und ausgebildet ist, dass das Fliehgewicht (1.1) einen Zug auf die zweite mechanische Verbindung (5.0) gegen die Vorspannung des vorgespannten Anschlags (2.1, 2.2) ausübt, wenn die Fliehkraft eine vorgebbare Kraft überschreitet.

2. Die Vorrichtung nach Anspruch 1, wobei die erste mechanische Verbindung (2.0) und/oder die zweite mechanische Verbindung (5.0) jeweils durch eine Zugstange (2.0, 5.0) gebildet ist.

3. Die Vorrichtung nach Anspruch 1 oder 2, wobei die zweite mechanische Verbindung (5.0) derart angeordnet und ausgebildet ist, dass der Zug des Fliehgewichts (1.1) auf die zweite mechanische Verbindung (5.0), ein Anstellen des mindestens einen Rotorblatts in die, in Bezug auf das Anstellen durch die erste mechanische Verbindung (2.0), entgegengesetzte Richtung (4.1, 4.2) hervorruft.

4. Die Vorrichtung nach einem der Ansprüche 1 bis 3, wobei die erste mechanische Verbindung (2.0) durch eine erste Zugstange gebildet ist (2.0) und der vorgespannte Anschlag (2.1, 2.2) eine Feder (2.2), vorzugsweise eine Druckfeder (2.2), umfasst, die in Richtung der Längsachse der ersten Zugstange (2.0) angeordnet ist, wobei die Feder (2.2) derart angeordnet und ausgebildet ist, dass diese eine Vorspannung in Richtung der Längsachse der ersten Zugstange (2.0) erzeugt.

5. Die Vorrichtung nach einem der vorhergehenden Ansprüche, wobei die Vorrichtung einen, wahlweise einstellbaren, Begrenzer (2.4), insbesondere eine Begrenzungszange (2.4), umfasst, der derart angeordnet und ausgebildet ist, dass eine Vorspannung der Feder (2.2) unabhängig von der Position des Fliehgewichts (1.1) erhalten bleibt.

6. Die Vorrichtung nach einem der vorhergehenden Ansprüche, wobei die erste und die zweite mechanische Verbindung (2.0, 5.0) jeweils durch eine Zugstange (2.0, 5.0) gebildet ist und jede Zugstange (2.0, 5.0) jeweils an einem Punkt mit dem Rotorblatt verbunden wird, wobei die beiden Punkte senkrecht zur Anstellachse betrachtet im Wesentlichen gegenüberliegend angeordnet sind.

7. Die Vorrichtung nach einem der vorhergehenden Ansprüche, wobei die erste mechanische Verbindung (2.0) durch eine erste Zugstange (2.0) gebildet ist und die zweite mechanische Verbindung (5.0) durch eine zweite Zugstange (5.0) gebildet ist und die erste Zugstange (2.0) und/oder die zweite Zugstange (5.0) drehbar und/oder vorzugsweise durch ein Anschlagrohr (2.3, 5.2) gleitend mit dem mindestens einen Rotorblatt verbunden sind.

8. Die Vorrichtung nach einem der vorhergehenden Ansprüche, wobei die Vorrichtung weiterhin einen Hebel umfasst, der ein erstes Ende aufweist, an dem dieser drehbar mit einer Drehachse (1.0) verbunden ist und ein zweites Ende aufweist, an dem das Fliehgewicht (1.1) angeordnet ist, wobei die erste mechanische Verbindung (2.0) durch eine erste Zugstange (2.0) gebildet ist, welche an einem ersten Ende drehbar mit einem ersten Punkt an dem Hebel verbunden ist und der vorgespannte Anschlag (2.1, 2.2) im Wesentlichen an dem zweiten Ende der ersten Zugstange (2.0) angeordnet ist; und die zweite mechanische Verbindung durch eine zweite Zugstange (5.0) gebildet ist, die vorzugsweise durch ein Anschlagrohr (5.2) gleitend und drehbar mit dem Hebel in einem zweiten Punkt verbunden ist und ein zweites Ende der zweiten Zugstange (5.0) drehbar mit dem mindestens einen Rotorblatt verbunden ist.

9. Die Vorrichtung nach einem der Ansprüche 1 bis 7, wobei die Vorrichtung weiterhin einen Hebel umfasst, welcher ein erstes Ende aufweist an dem dieser drehbar mit einer Drehachse (1.0) verbunden ist und der Hebel ein zweites Ende aufweist, an dem das Fliehgewicht (1.1) angeordnet ist und wobei die erste mechanische Verbindung (2.0) durch eine erste Zugstange (2.0) gebildet ist, welche an einem ersten Ende drehbar mit dem Hebel in einem ersten Punkt verbunden ist und der vorgespannte Anschlag (2.1) im Wesentlichen an dem zweiten Ende der ersten Zugstange (2.0) angeordnet ist; und wobei die zweite mechanische Verbindung (5.0) durch eine zweite Zugstange (5.0) gebildet ist, welche an einem Ende drehbar mit dem Hebel in einem zweiten Punkt verbunden ist und weiterhin die zweite Zugstange (5.0) vorzugsweise durch ein Anschlagrohr (5.2) gleitend und drehbar mit dem mindestens einen Rotorblatt verbunden ist.

10. Die Vorrichtung nach Anspruch 8 oder 9, wobei der zweite Punkt, in dem die zweite Zugstange (5.0) mit dem Hebel verbunden ist, näher in Richtung des Fliehgewichts (1.1) angeordnet ist als der erste Punkt, in dem die erste Zugstange (2.0) mit dem Hebel verbunden ist.

11. Die Vorrichtung nach einem der vorhergehenden Ansprüche, wobei die zweite mechanische Verbindung (5.0) durch eine zweite Zugstange (5.0) gebildet ist und der Anschlag (5.1) der zweiten Zugstange (5.0) durch ein Einstellmittel (5.1), vorzugsweise eine Stellschraube (5.1) gebildet ist, mit dem die Position des Anschlags (5.1) auf der zweiten Zugstange (5.0) verstellbar ist, so dass die Kraft, oberhalb der zweiten Zugstange (5.0) einen Zug auf das mindestens eine Rotorblatt ausübt, einstellbar ist.

12. Die Vorrichtung nach einem der vorhergehenden Ansprüche, wobei die zweite mechanische Verbindung (5.0) durch eine zweite Zugstange (5.0) gebildet ist, und die Vorrichtung eine Zugfeder (5.4) umfasst, welche an einem ihrer Enden mit dem Fliehgewicht (1.1), oder wahlweise dem Hebel, verbunden ist und an ihrem anderen Ende mit der zweiten Zugstange (5.0) verbunden ist, so dass eine Anfahrstellung des mindestens einen Rotorblatts mittels der Zugfeder (5.4) einstellbar ist.

13. Die Vorrichtung nach Anspruch 12, wobei der vorgespannte Anschlag (2.1, 2.2) derart ausgebildet ist, dass dieser eine größere Federkraft als die Zugfeder (5.4) aufweist.

14. Die Vorrichtung nach einem der Ansprüche 12 oder 13, wobei die Zugfeder (5.4) im Wesentlichen parallel zu der zweiten Zugstange (5.0) angeordnet ist.
